# EUROPEAN PATENT SPECIFICATION

(11) **EP 2 040 399 B1**
(45) Date of publication and mention of the grant of the patent: **14.11.2012**
(21) Application number: 07764140.5
(22) Date of filing: 29.06.2007
(51) Int. Cl.: H04B 10/24, H04Q 11/00

(54) **AN OPTICAL BURST SWITCHING NETWORK BASED BURST PACKET TRANSMITTING SYSTEM AND THE METHOD THEREOF**
BURSTPAKETÜBERTRAGUNGSSYSTEM AUF DER BASIS EINES OPTISCHEN BURST-VERMITTLUNGSNETZWERKS UND VERFAHREN DAFÜR
SYSTÈME DE TRANSMISSION DE PAQUETS EN RAFALES BASÉ SUR UN RÉSEAU À COMMUTATION OPTIQUE DE RAFALES, ET PROCÉDÉ CORRESPONDANT

(30) Priority: 29.06.2006 CN 200610090335
(43) Date of publication of application: 25.03.2009
(73) Proprietor: Huawei Technologies Co., Ltd., Longgang District, Shenzhen Guangdong 518129 (CN); Beijing University of Posts and Telecommunications, Beijing 100876 (CN)
(72) Inventor: LIU, Xin, Guangdong 518129 (CN); WU, Jian, Guangdong 518129 (CN); LIN, Jintong, Guangdong 518129 (CN); LIU, Yue, Guangdong 518129 (CN)
(74) Representative: Körber, Martin Hans
(86) International application number: PCT/CN2007/070211
(87) International publication number: WO 2008/003267

(56) References cited:
- EP-A2- 1 089 498
- CN-A- 1 610 286
- CN-A- 1 719 944
- US-A1- 2004 264 960
- US-A1- 2005 152 351

## Description

### FIELD OF THE INVENTION

The present invention relates to optical burst switching technical field, and more particularly to a burst sending system based on an optical burst switching network, capable of quickly classifying and assembling service data packets with high efficiency, buffering burst with large volume, and accurately and periodically sending the burst, and a burst sending method based on the burst sending system.

### BACKGROUND

Along with the continuously expanding Internet scale and the emerging services, the Internet service enters a quickly increasing period. Because of diversity and variety of the services, the conventional core switching network is no longer adapted to the development of the Internet. Therefore, optical network technology is generated, and recently, the optical network adopts static or dynamic wavelength routing, i.e. optical circuit switching (OCS) mechanism. The OCS mechanism protocol is relatively simple with mature technology, and is easy to be realized. However, the mechanism is similar to the conventional circuit switching mechanism, and a certain period of time is required when a channel is established and terminated. The time has nothing to do with the connection duration, but mainly depends on an end-to-end signaling time. When the connection duration is relatively short, the utilization rate of the channel is reduced necessarily. Therefore, the OCS mechanism is not suitable for the Internet flow which is continuously increased and changed, and it is necessary to appropriately simplify the network nodes.

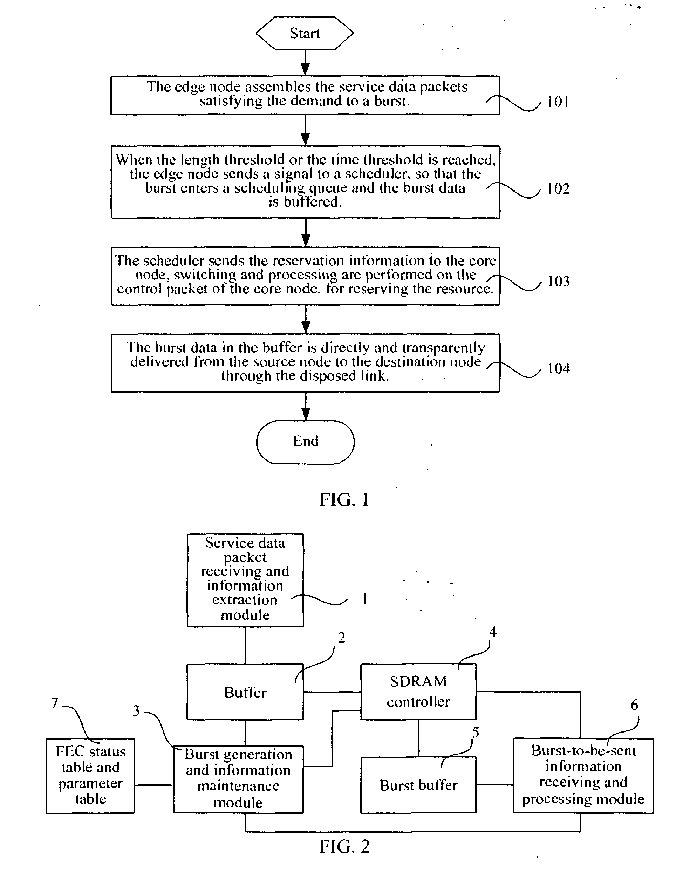

In view of the above problem, optical burst switching (OBS) is a better resolution. In the OBS network, a basic switching unit is a burst. The burst is composed by many IP packets having the same egress router address and the same quality of service (QoS). The OBS nodes include core nodes and edge nodes. As shown in FIG. 1, a schematic flow chart of assembling and sending packets at the edge node of an OBS network in the prior art is illustrated. In step 101, the edge node assembles the IP packets with the same QoS demand and entering from various service interfaces with the addresses to the same egress router into a burst much longer than an IP packet. In step 102, when the length of the burst reaches a data length threshold required by the network, or when a time-to-live of the burst reaches a required time threshold, the edge node no longer adds IP data to the burst, and at the same time, sends a burst assembly finish signal to a scheduler, so that the burst enters a scheduling queue and the burst data packet is buffered; In step 103, the scheduler sends the generated reservation information to a core node to reserve the network resource, at the same time, at the middle core node, electrical-optical-electrical switching and electric information processing are performed on a control packet, for reserving the resource for the corresponding optical burst packet; In step 104, it is not necessary to perform the electrical-optical-electrical processing on the burst data packet in the buffer, and the burst data packet may be directly and transparently (which is all optical, i.e. without performing the electrical-optical-electrical processing) delivered from the source node to the destination node through the link pre-disposed by the control packet.

In terms of physical channel, the IP data packets may be delivered by different wavelengths in the same fiber; and in terms of time, the control packet is sent a period of time (i.e., offset time) before sending the burst data packet. This is similar to the way that before a touring party (a burst) takes a trip, a person (a control packet) is assigned to book tickets and hotel in advance, and the rest of the touring party just need to take the trip according to the preset information.

Under the OBS network, it is a critical problem of realizing the OBS network how to quickly and efficiently perform the classified assembly on the service data packets, to buffer the burst at a large volume, and to accurately and periodically send the burst (i.e., the offset time) at the OBS edge node. In order to realize the OBS mechanism, recently various data packets are assembled by a network processor. The network processor stores the IP data packets of the service end to a synchronous dynamic random access memory (SDRAM) buffer region, extracts an IP address, queries an optical node number through the IP address, and then stores the data in the SDRAM buffer region to the corresponding data region of the SDRAM according to the optical node number. When one burst reaches the time threshold or the length threshold, the network processor sends the burst message to the scheduling chip, and sends the data to a light emitting chip for buffering.

In the assembling manner by adopting the network processor, after extracting the data from the physical layer chip, it is necessary to perform buffering at the SDRAM twice or to perform buffering on the SDRAM once and maintain a burst link table. Both manners have relatively low efficiency, and at the same time, the network processor has weak control on the hardware, resulting in insufficient real time performance and congestion during burst sending. Moreover, it is difficult to send the burst in a compact manner, and the objective of accurate and periodical sending may only be achieved by externally connecting a high speed buffer. In addition, various parameters of the burst are not disposed flexibly enough to realize the self-adaptive assembly calculation method, and the available statistic means is relatively few.

In order to improve the assembling and the sending efficiency, a high-speed static random access memory (SRAM) may be adapted for buffer so as to increase the system access bandwidth and solve the read/write conflict of the burst periodically sent by the system. However, the current SRAM capacity is far from satisfying the assembling demand, and has weak expanding capability and high cost. Additionally, EP 1089498 A2 disclosed a control architecture for an optical burst-switched network includes an electronic ingress edge router, a switch control unit at each hop, and an electronic egress edge router. The electronic ingress edge router assembles multiple data packets into a burst. The switch control units at each hop configure the optical switching matrix to switch the burst through the optical burst-switched network. And the electronic egress edge router receives the burst from the optical burst-switched network and disassembles the burst into multiple data packets. And US 2004/264960 A1 disclosed an architecture and method for performing coarse-grain reservation of lightpaths within WDM based PBS networks with variable time slot provisioning. The method employs a GMPLS-based PBS label that includes information identifying each lightpath segment in a selected lightpath route. However, the two application can not realize high-speed burst assembling or mass data buffering.

### SUMMARY OF THE INVENTION

In view of the several disadvantages of the prior art when realizing OBS mechanism, embodiments of the present invention provide a burst sending system and method based on optical burst switching network, the burst sending system and method may realize high-speed burst assembling, mass data buffering, and accurate and periodical burst sending.

As embodied and broadly described herein, embodiments of the present invention provide a burst sending system based on optical burst switching network which includes a service data packet receiving and information extraction module, a burst generation and information maintenance module, an SDRAM controller, a burst buffer, a burst-to-be-sent information receiving and processing module and an accurate timer.

The service data packet receiving and information extracting module is connected to a buffer, and adapted to receive a service data packet, extract description information, and then store the service data packet and the description information in the buffer.

The burst generation and information maintenance module is connected to the buffer, and adapted to assemble the service data packet according to a forwarding equivalence class (FEC) status parameter table, update FEC status information and/or FEC parameter information, and output the FEC status information and/or the FEC parameter information when the burst reaches a length threshold.

The SDRAM controller is connected to the buffer and the burst generation and information maintenance module, and adapted to execute a burst read/write operation on an external SDRAM.

The burst buffer is connected to the SDRAM controller and an optical physical layer device, and adapted to provide a buffer space for sending the burst.

The burst-to-be-sent information receiving and processing module is connected to the burst generation and information maintenance module, the SDRAM controller and the burst buffer, and adapted to invoke the SDRAM controller to store the burst to the burst buffer, read the burst from the burst buffer, convert the burst to an optical burst data packet to be sent to a destination address. The accurate timer is connected to the burst-to-be-sent information receiving and processing module, and adapted to reserve a sending startup time with a fixed length before sending burst data.

In the technical scheme, the buffer further includes an information buffer and a data buffer. The information buffer is connected to the service data packet receiving and information extracting module and the burst generation and information maintenance module, and adapted to store the description information of a current service data packet. The data buffer is connected to the service data packet receiving and information extracting module, the burst generation and information maintenance module and the SDRAM controller, and adapted to store the current service data packet.

In the technical scheme, the system may further includes a time polling detector connected to the burst-to-be-sent information receiving and processing module, and adapted to output the FEC status information and/or the FEC parameter information when it is detected that the burst reaches a time threshold.

The system further includes an FEC access arbitrator connected to the burst generation and information maintenance module and the time polling detector, and adapted to arbitrate a right of access to an FEC status table and an FEC parameter table when the burst generation and information maintenance module and the time polling detector both need to execute a read/write operation on the FEC status table and the FEC parameter table.

The system further includes a burst information generator connected to the burst generation and information maintenance module, the time polling detector and the burst-to-be-sent information receiving and processing module, and adapted to integrate the FEC status information and/or the FEC parameter information sent by the burst generation and information maintenance module and the time polling detector to an unified external interface.

As embodied and broadly described herein, embodiments of the present invention further provide a burst sending method based on optical burst switching network, wherein the method includes the following steps:

In step 1, the service data packet receiving and information extracting module stores entered service data and description information thereof to a buffer;

In step 2, the burst generation and information maintenance module stores the service data to the SDRAM through the SDRAM controller to form a burst, and when the burst reaches the length threshold, the burst generation and information maintenance module sends a burst sending request to the burst information generator;

In step 3, the burst information generator sends the description information of the burst to a scheduling chip;

In step 4, when the burst-to-be-sent information receiving and processing module receives a scheduling signal sent by the scheduling chip and the description information of the burst, the accurate timer is started to count down, at the same time, the burst data with agreed length in the SDRAM is written in the burst buffer through the SDRAM controller;

In step 5, when the sending moment is reached, the burst-to-be-sent information receiving and processing module reads and converts the burst data in the burst buffer to an optical burst data packet, and sends the optical burst data packet to the destination address. At the same time, the burst-to-be-sent information receiving and processing module detects whether data amount of the burst buffer is lower than a security value on real time; when the data amount is lower than the security value, the burst-to-be-sent information receiving and processing module continues to send the address information and the read request to the SDRAM controller, and writes the rest data with agreed length of the burst in the burst buffer until the whole burst is read.

The step 4 further includes the following steps;

In step 41, when the burst-to-be-sent information receiving and processing module receives the scheduling signal sent by the scheduling chip and the burst description information in the burst information receiving buffer, the accurate timer is started to count down;

In step 42, a reading request including the burst address information is sent to the SDRAM controller; the burst data with agreed length in the SDRAM is written in the burst buffer through the SDRAM controller.

In the technical scheme, the step 1 further includes the following steps:

In step 11, when the service data enters the service data packet receiving and information extracting module, the service data packet receiving and information extracting module converts a data width of the service data to an internal bus width through a serial-to-parallel conversion, and stores the service data in the data buffer;

In step 12, the service data packet receiving and information extracting module extracts the description information of the service data, and stores the description information in the information buffer.

In detail, in the step 12, the service data packet receiving and information extracting module extracts the service address and the QoS of the IP data, and stores them in the information buffer.

The step 2 further includes the following steps:

In step 21, the burst generation and information maintenance module reads the description data of the service data in the information buffer in sequence, and searches for a corresponding FEC number;

In step 22, the burst generation and information maintenance module sends the FEC number to the FEC access arbitrator module, acquires the FEC status information and/or the FEC parameter information, and obtains SDRAM storing address information of the service data packet;

In step 23, the burst generation and information maintenance module stores the service data packet to the SDRAM storing address through the SDRAM controller;

In step 24, when the burst generation and information maintenance module detects that the burst reaches the length threshold, the burst generation and information maintenance module sends the burst sending request including the FEC status information to the burst information generator, and updates the FEC status information.

The step 22 further includes the following steps:

In step 221, the burst generation and information maintenance module sends the FEC number to the FEC access arbitrator module, and applies for the right of access to the FEC status table and the assembly parameter table;

In step 222, when the FEC access arbitrator module returns the FEC status information and/or FEC parameter information, the burst generation and information maintenance module judges whether the FEC allows the assembling; if the FEC allows the assembling, step 223 is executed; otherwise, a command of abandoning the service data packet is sent to the data buffer, and the process returns to the step 21;

In step 223, the burst generation and information maintenance module judges whether the FEC burst exists; if the FEC burst exists, step 225 is executed; if the FEC burst does not exist, step 224 is executed;

In step 224, the burst generation and information maintenance module applies for an SDRAM space, reads and updates the current SDRAM base address counter, and obtains the SDRAM storing using space of the burst;

In step 225, the burst-length information and the current SDRAM storing address information are obtained by operation.

At this time, in detail, in the step 23, the burst generation and information maintenance module sends a writing request to the SDRAM controller, and writes the service data from the data buffer to the current SDRAM storing address through the SDRAM controller.

After the step 22, in addition to judging the length threshold, the method further includes detecting whether the time threshold is reached through the time polling detector, and the detailed operation is described below:

In step 231, the time polling detector sends the current FEC number to the FEC access arbitrator, and applies for the right of access to the FEC status table and the FEC parameter table;

In step 232, the FEC access arbitrator module returns the FEC status information and/or the FEC parameter information to the time polling detector;

In step 233, the time polling detector detects whether the FEC number reaches the time threshold; if the FEC number reaches the time threshold, the FEC status parameter is sent to the burst information generator, and the FEC status information and/or the FEC parameter information is updated; otherwise, step 234 is executed;

In step 234, the time polling detector releases the right of access to the FEC status parameter table, and returns to the step 231 to detect a next FEC number.

The step 5 further includes the following steps:

In step 51, when it is detected that a sending moment is reached, the burst-to-be-sent information receiving and processing module reads the burst in the burst buffer and converts the burst to the optical burst data packet; at the same time, the burst-to-be-sent information receiving and processing module detects whether the data amount of the burst buffer is lower than the security value on real time; when the data amount is lower than the security value, the burst-to-be-sent information receiving and processing module continues to send the address information and the reading request to the SDRAM controller, and writes the rest data with agreed length of the burst in the burst buffer until the whole burst is read and sent.

The read/write operation of the SDRAM controller further includes the following steps;

In step 100, initializing the SDRAM; and entering an idle status waiting for the read/write; at the same time, starting a refresh timer; and performing a refresh operation on the SDRAM when a refresh time is reached;

In step 101, when a writing request signal is detected, continuously writing the data from the requested writing address to the SDRAM in a burst writing mode until the whole service data packet is written, and then returning to the idle status;

In step 102, when a reading request signal including the agreed data length is detected, read the data with agreed data length from the requested reading address to the burst buffer in a burst reading mode, and then returning to the idle status.

In the technical scheme, the writing the service data from the data buffer to the current SDRAM storing address through the SDRAM controller includes reading the service data from the data buffer, and continuously writing the service data, by the SDRAM controller, from the current SDRAM stored address in the SDRAM, according to the address space.

The acquiring the FEC status information and/or the FEC parameter information includes: obtaining the FEC status information and/or the FEC parameter information; and wherein the FEC status information includes: an empty flag bit for performing a new burst initialization; an SDRAM initial address for indicating an initial storing address of the current burst; a current SDRAM writing address for indicating a storing address of a next service data of the burst; a current burst-length for judging whether the burst-length exceeds the length threshold; and a burst generation time for judging whether the burst exceeds the time threshold;

the FEC parameter information includes: a using flag for judging whether the current assembly parameter is being used; an enabling flag for judging whether the current FEC may perform the assembly; a length threshold for providing the length threshold; a burst time threshold for providing the time threshold; and a burst base address increment for applying for the SDRAM space.

Based on the technical scheme, embodiments of the present invention have the following advantages:

1. In embodiments of the present invention, the data and description information of the externally entered service data packet are respectively stored, and the corresponding processing is just performed on the description information. In this way, multiple transferring and operation of the data in the service data packet are prevented, and the assembling efficiency is improved.

2. In embodiments of the present invention, the burst read/write mode of the SDRAM is adopted, when writing the service data, the whole service data packet is written into the SDRAM at one time; and when reading the burst, a part of the burst data is pre-read to the burst buffer in advance. Therefore, the utilizing efficiency of the SDRAM data bus is improved at the maximum extent, and the read/write speed is macroscopically improved, so that the similar effect may be reached without using the high speed SRAM, and the capacity and the cost are better.

3. In embodiments of the present invention, the FEC status and the parameter table are maintained and updated; the service data packet is driven; and the length threshold and the time threshold are detected by means of instant polling, so the disposing manner and the maintenance are relatively flexible.

4. In embodiments of the present invention, when the SDRAM space is adapted, a dynamic applying manner instead of the fixedly allocated memory space is adopted; the continuous address space is adopted for storing the burst, so it is flexible and efficient on the adapting of the memory space.

In the following, a further detailed description of the technical scheme of the present invention is given through the accompanying drawings and the embodiments.

### BRIEF DESCRIPTION OF THE DRAWINGS

FIG. 1 is a schematic flow chart for sending packets at the edge node in an OBS network in the prior art;

FIG. 2 is a schematic structural diagram of a burst sending system based on optical burst switching network and shown as an example, useful understanding the invention ;

FIG. 3 is a schematic structural diagram of a burst sending system based on optical burst switching network and shown as an example, useful understanding the invention ;

FIG. 4 is a schematic structural diagram of a burst sending system based on optical burst switching network and shown as an example, useful understanding the invention ;

FIG. 5 is a schematic structural diagram of a burst sending system based on optical burst switching network according to an embodiment of the present invention;

FIG. 6 is a schematic basic flow chart of a burst sending method based on optical burst switching network according to an embodiment of the present invention;

FIG. 7 is a schematic flow chart of receiving service data packet and extracting information according to an embodiment of the present invention;

FIG 8 is a schematic flow chart of generating the burst and maintaining the burst information according to an embodiment of the present invention;

FIG. 9 is a schematic flow chart of time polling detection according to an embodiment of the present invention;

FIG. 10 is a schematic flow chart of receiving and processing the burst-to-be-sent information; and

FIG. 11 is a schematic flow chart of the read/write operation of the SDRAM controller.

### DETAILED DESCRIPTION

In the network burst sending system provided in embodiments of the present invention, the burst data may be pre-read to the burst buffer before sending, so as to greatly improve the using efficiency of the data bus, and improve the burst sending speed. When the service data packet enters, the corresponding processing is only performed on the description information, thus reducing the multiple transferring of the data, and accelerating the processing of the whole system.

In FIG. 2, a schematic structural view of a burst sending system based on optical burst switching network according to a first example of the present invent is shown. The system includes a service data packet receiving and information extraction module 1, a buffer 2, a burst generation and information maintenance module 3, an SDRAM controller 4 (i.e. a storage unit controller), a burst buffer 5, and a burst-to-be-sent information receiving and processing module 6.

The service data packet receiving and information extracting module 1 is adapted to receive the entered service data packet, extract the description information from the service data packet, and then store the service data packet and the description information in the buffer 2; the description information includes a service data packet length, a service source address, a service destination address, and a QoS field etc.; the burst generation and information maintenance module 3 is connected to the buffer 2, and adapted to assemble the service data packet according to an FEC status table and parameter table 7, update the FEC status information and the FEC parameter information, and then write the assembled service data packet in the SDRAM (i.e. the storage unit). When it is detected that a burst-length of the burst (i.e. the assembled service data packet) reaches a length threshold, the FEC status parameter information is output to a scheduling chip;

The SDRAM controller 4 is connected to the buffer 2 and the burst generation and information maintenance module 3, and adapted to execute a burst read/write operation on an external SDRAM. The burst-to-be-sent information receiving and processing module 6 is connected to the burst generation and information maintenance module 3, the SDRAM controller 4and the burst buffer 5, and adapted to invoke the SDRAM controller 4 to store the burst in the burst buffer 5, read the burst from the burst buffer 5, convert the burst to an optical burst data packet and send the optical burst data packet after receiving the sending instruction sent by the scheduling chip. The burst buffer 5 is connected to the SDRAM controller and an optical physical layer device, and adapted to provide buffer space for the burst during the sending, thus realizing the pre-reading, and ensuring that the burst is smoothly and effectively sent through the channel.

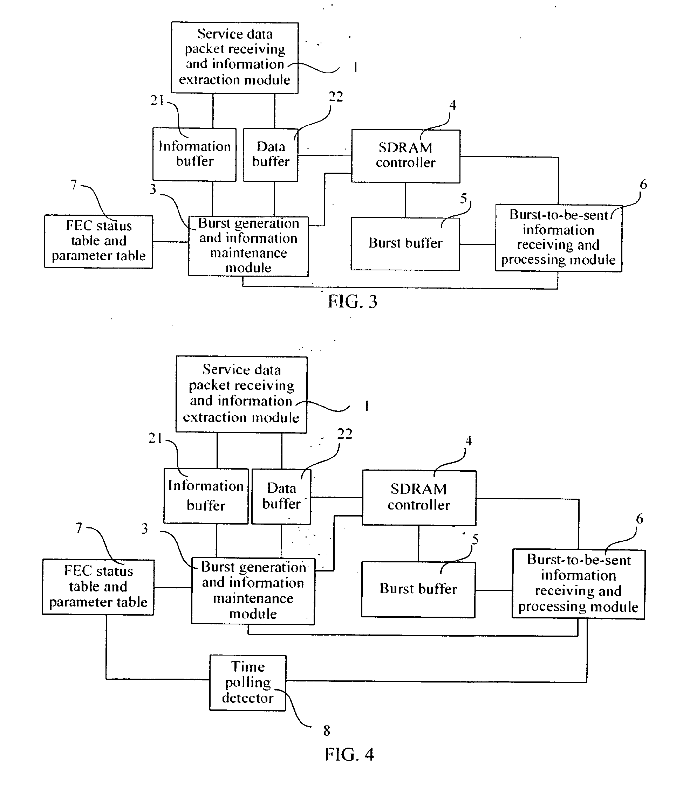

In FIG. 3, a schematic structural view of a burst sending system based on optical burst switching network according to a second example of the present invention is shown. As compared with the previous example, the buffer 2 in this example further includes an information buffer 21 and a data buffer 22. The information buffer 21 is connected to the service data packet receiving and information extracting module 1 and the burst generation and information maintenance module 3, and adapted to store the description information of the current service data packet. The data buffer 22 is connected to the service data packet receiving and information extracting module 1, the burst generation and information maintenance module 3 and the SDRAM controller, and adapted to store the data of the current service data packet. In this embodiment, the buffer is separated, so that the system operates the description data, thus preventing the multiple transferring of the data of the service data packet. The data amount of the description data of the service data is usually relatively small, so the efficiency is higher than that of directly operating the data of the service data packet.

In FIG. 4, a schematic structural view of a burst sending system based on optical burst switching network according to a third example of the present invention is shown. In the previous two embodiments, the burst generation and information maintenance module 3 judges whether to send the sending request according to whether the burst length reaches the length threshold. In practice, in the network, the data packet has a certain time-to-live limit, so in this example, a time polling detector 8 is added to judge whether the time-to-live of the burst reaches the time threshold. The time polling detector 8 is connected to the burst-to-be-sent information receiving and processing module 6. When it is determined that the burst reaches the time threshold by detection according to the FEC status and parameter information recorded in the FEC status table and parameter table 7, the time polling detector 8 outputs the FEC status parameter information to the scheduling chip, and then the scheduling chip sends the FEC status parameter information to the burst-to-be-sent information receiving and processing module 6.

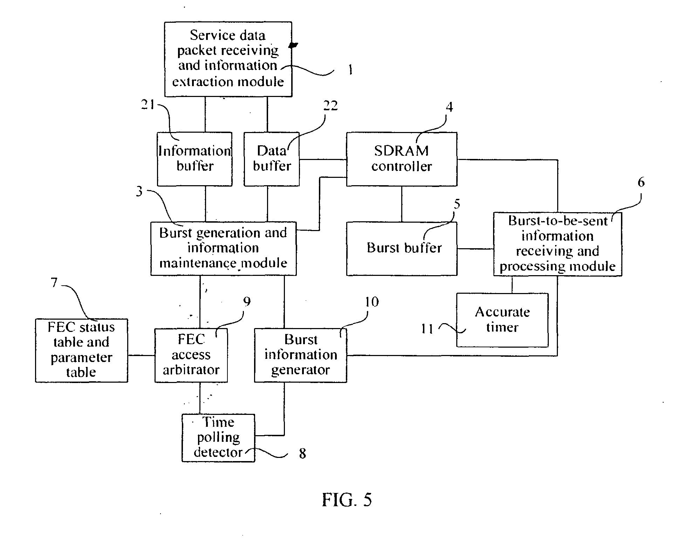

In FIG 5, a schematic structural view of a burst sending system based on optical burst switching network according to an embodiment of the present invention is shown. The time polling detector 8 and the burst generation and information maintenance module 3 both need to read/write the FEC status table and parameter table 7, conflict may occur if no processing performed; so in this embodiment, an FEC access arbitrator 9 is added. The FEC access arbitrator 9 is connected to the burst generation and information maintenance module 3 and the time polling detector 8, and adapted to arbitrate the right of access to the FEC status table and the FEC parameter table when the burst generation and information maintenance module and the time polling detector both need to perform the read/write operation on the FEC status table and the FEC parameter table.

In addition, in order to integrate the FEC status and FEC parameter information sent by the burst generation and information maintenance module 3 and the time polling detector 8 to a unified external interface, in this embodiment, a burst information generator 10 is added. The burst information generator 10 is connected to the burst generation and information maintenance module 3, the time polling detector 8, and the burst-to-be-sent information receiving and processing module 6, so that the FEC status and/or the parameter information may be sent through the unified external interface to the scheduling chip to be scheduled, and sent to the burst-to-be-sent information receiving and processing module 6, thereby executing the sending operation.

In this embodiment, an accurate timer 11 may also be added, and adapted to reserve a sending startup time with a fixed length before sending the burst data so as to ensure that the burst-to-be-sent information receiving and processing module 6 reads the burst to the burst buffer 5 in advance before sending, thereby improving the sending speed. The accurate timer 11 is connected to the burst-to-be-sent information receiving and processing module 6, so as to accurately perform the count-down; the counted time is not an offset time, but a sending startup time much shorter than the offset time. When the accurate timer 1 reaches the sending moment, the burst-to-be-sent information receiving and processing module 6 converts the burst in the burst buffer 5 to an optical burst data packet, and at the same time, continuously reads the burst in the buffer for sending during the sending process.

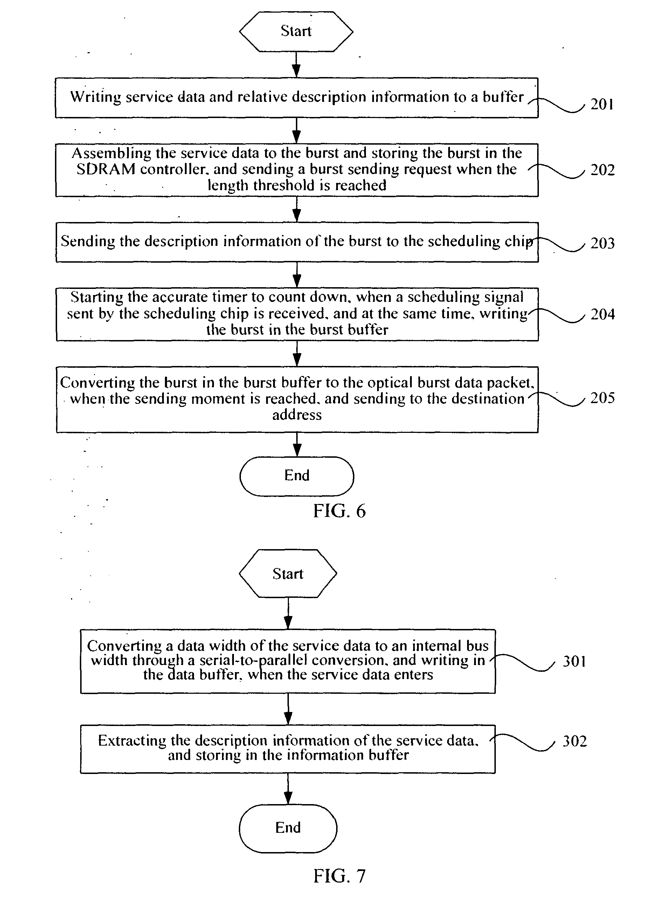

Based on the burst sending system, embodiments of the present invention provides a burst sending method, as shown in FIG. 6, a schematic basic flow chart of a burst sending method based on optical burst switching network according to embodiments of the present invention is shown, and the method includes the following steps:

In step 201, the service data packet receiving and information extracting module writes entered service data and relative description information to the buffer;

In step 202, the burst generation and information maintenance module writes the service data to the corresponding SDRAM address in sequence to assemble the service data to a burst, and when the burst reaches the length threshold, the burst generation and information maintenance module sends a burst sending request to the burst information generator;

In step 203, the burst information generator sends the description information of the burst to the scheduling chip, and then the scheduling chip sends the description information to the burst-to-be-sent information receiving and processing module;

In step 204, when the burst-to-be-sent information receiving and processing module receives a scheduling signal sent by the scheduling chip and the description information of the burst, the accurate timer is started to count down; at the same time, a part of the data of the burst in the SDRAM controller is written in the burst buffer;

In step 205, when the sending moment is reached, the burst-to-be-sent information receiving and processing module converts the burst in the burst buffer to the optical burst data packet, sends the optical burst data packet to the destination address, and at the same time, continues to read and send the rest data of the burst in the burst buffer.

In FIG. 7, a schematic flow chart of receiving service data packet and extracting information according to an embodiment of the present invention is shown; and the detailed steps of the step 201 are described as follows:

In step 301, the service data packet receiving and information extracting module is in a status of waiting for external effective data. When the service data enters the service data packet receiving and information extracting module, the service data packet receiving and information extracting module converts a data width of the service data to an internal bus width through a serial-to-parallel conversion, and writes the service data in the data buffer. Usually the internal bus data width is integral multiple of the data width of the entered service data;

In step 302, at the same time as the service data is written in the data buffer, the service data packet receiving and information extracting module extracts the description information of the service data (service source address, service destination address, and QoS field etc.), and stores the description information in the information buffer. After the data writing is end, the process returns the step 301 to continue to be in the waiting status.

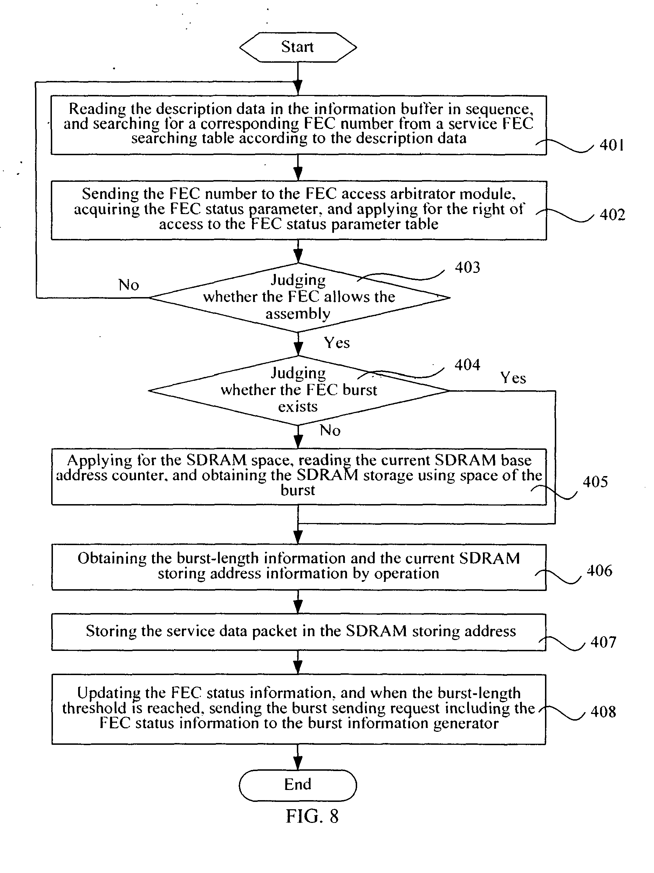

In FIG 8, a schematic flow chart of generating the burst and maintaining the burst information according to an embodiment of the present invention is shown, and the detailed steps of the step 202 are described as follows;

In step 401, when the information buffer is not empty, the burst generation and information maintenance module reads the description information, i.e. the description data, of each service data in the information buffer in sequence, and searches for a corresponding FEC number from a service FEC searching table according to the description data (e.g., service destination address and QoS field);

In step 402, the burst generation and information maintenance module sends the FEC number to the FEC access arbitrator module, acquires the FEC status and parameter information, and applies for the right of access to the FEC status and parameter table;

In step 403, when the FEC access arbitrator module returns the FEC status and parameter information, the burst generation and information maintenance module judges whether the FEC allows the assembly; if the FEC allows the assembly, step 404 is executed; otherwise, the burst generation and information maintenance module sends the command of abandoning the service data packet to the data buffer and the process returns to the step 401;

In step 404, the burst generation and information maintenance module judges whether the FEC burst exists; if the FEC burst exists, step 406 is executed; otherwise, step 405 is executed;

In step 405, the burst generation and information maintenance module applies for the SDRAM space, reads and updates the current SDRAM base address counter, and obtains the SDRAM storing using space of the burst, and then step 406 is executed;

In step 406, the burst-length information and the current SDRAM storing address information are obtained by operation;

In step 407, the burst generation and information maintenance module stores the burst in the SDRAM storing address, reads the service data from the data buffer, and continuously writes from the current SRAM storing address in the SDRAM controller according to the address space;

In step 408, when detecting that the burst reaches the length threshold, the burst generation and information maintenance module sends the burst sending request including the FEC status information and/or parameter information to the burst information generator, and updates the FEC status information.

The format of the FEC status table is as shown in Table 1 below. The FEC status table includes: an empty flag bit for performing a new burst initialization, an SDRAM initial address for indicating an initial storing address of the current burst, a current SDRAM writing address for indicating a storing address of a next service data packet of the burst, a current burst-length for judging whether the burst-length exceeds the length threshold, and a burst generation time for judging whether the burst exceeds the time threshold.

**Table 1**

| | | | | |
|---|---|---|---|---|
| Empty Flag | SDRAM Initial Position | Current SDRAM Writing Address | Current Burst-length | Burst Generation Time |

The format of the FEC parameter table is as shown in Table 2 below. The FEC parameter table includes: a using flag for judging whether the current assembly parameter is being used, an enabling flag for judging whether the current FEC may perform the assembly, a burst length threshold for providing the length threshold, a burst time threshold for providing the time threshold, and a burst base address increment for applying for the SDRAM space.

**Table 2**

| | | | | |
|---|---|---|---|---|
| Using Flag | Enabling Flag | Burst Length Threshold | Burst Time Threshold | Burst Base Address Increment |

In the step 403, it may be judged whether the assembly is allowed by judging the enabling flag. In the step 404, it may be judged whether the FEC burst has been established by judging whether the empty flag bit is empty; if the FEC burst has not been established, a storage space is applied in the SDRAM; the current SDRAM base address counter is read, and adapted to dynamically manage the memory. When a burst is generated, it is necessary to obtain an SDRAM base address by reading the counter, and add a fixed numerical value (the burst base address increment) to the SDRAM base address counter so as to be used by a next burst. After the establishment of the burst, the using flag is set to be yes; and the empty flag is set to be no.

In the step 406, a new FEC burst-length value is generated by adding the burst-length of the service data packet to the original FEC burst-length value; a new current SDRAM address is generated by adding a required memory space value of the service data packet to the current SDRAM storing address; and the FEC status table is updated. When the step 407 is executed, the burst generation and information maintenance module sends a writing request to the SDRAM controller, and sends the SDRAM address wherein the service address should be stored. After the SDRAM controller responds, the burst generation and information maintenance module stores the burst from the data buffer to the SDRAM storing address. After one page of the SDRAM is full, interrupting the reading operation, waiting for the SDRAM to prepare a whole page burst writing operation of a new page, and continuing to write until the whole service data packet is stored in the SDRAM.

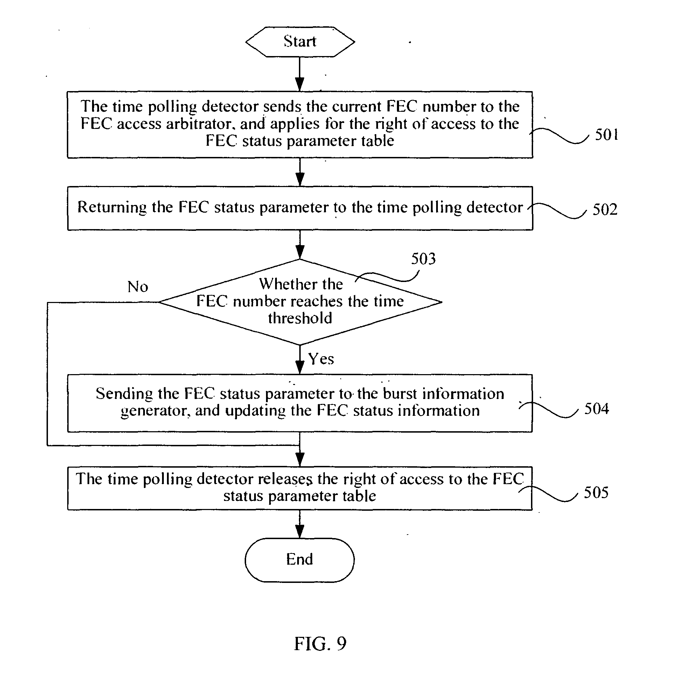

In FIG 9, a schematic flow chart of the time polling detection in embodiments of the present invention is shown. In addition to the burst-length limit, the burst formed by the service data in the network has the time-to-live limit, so it is necessary to judge whether the time-to-live of the burst exceeds the time threshold; and the detailed operation is described as follows:

In step 501, the time polling detector sends the current FEC number to the FEC access arbitrator, and applies for the right of access to the FEC status parameter table;

In step 502, the FEC access arbitrator module returns the FEC status parameter to the time polling detector;

In step 503, the time polling detector detects whether the FEC number reaches the time threshold; if the FEC number reaches the time threshold, step 504 is executed; otherwise, step 505 is executed;

In step 504, the FEC status parameter is sent to the burst information generator; and the FEC status information and the FEC parameter information are updated;

In step 505, the time polling detector releases the right of access to the FEC status parameter table; and the process returns the step 501 to detect a next FEC number.

As compared with the burst generation and information maintenance module which performs burst-length detection once on each service data, the time polling detector realizes the time threshold detection of the burst according to a certain time polling; the detection manner is similar to that of the burst generation and information maintenance module, in which it is necessary to send the application to the FEC access arbitrator so as to acquire the FEC status the parameter table. The operation priority of the burst generation and information maintenance module is higher than that of the time polling detector. The burst generation and information maintenance module may not be interrupted by other signal during the read/write process; only after the read/write is finished, the read/write right of the FEC status and parameter table may be released.

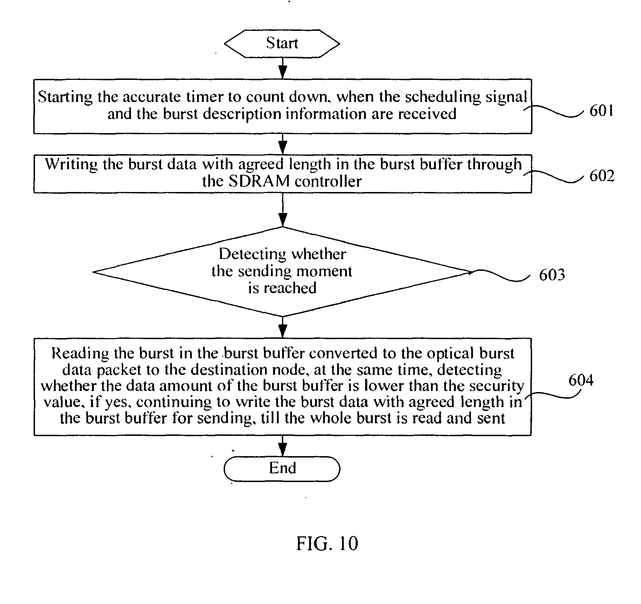

In FIG. 10, is a schematic flow chart of receiving and processing the burst-to-be-sent information is shown; and the detailed steps are described as follows;

In step 601, when the burst-to-be-sent information receiving and processing module receives the scheduling signal sent by the scheduling chip and the burst description information (storing address of the burst and the burst-length etc.) in the burst information receiving buffer, start the accurate timer to count down at the same time;

In step 602, sending a reading request including the burst address information to the SDRAM controller, and waiting for the SDRAM to return the data; when the SDRAM returns the data, writing the burst in the SDRAM controller in the burst buffer, and detecting the accurate timer on real time.

In step 603, when it is detected that the sending moment is reached, execute step 604.

In step 604, the burst-to-be-sent information receiving and processing module reads the burst in the burst buffer and converts the burst to the optical burst data packet, at the same time, detects whether the data amount of the burst buffer is lower than the security value, i.e., whether the data is enough to main the sending for a certain time. The reason of the detection is that it may be impossible to obtain the data of the SDRAM in a period of time when the data is written in the buffer, and at this time, the data buffer needs a certain buffer data for maintenance until the new SDRAM data is obtained, so as to shield the read/write competition on the SDRAM. When the data amount is lower than the security value, the address information and the reading request are sent to the SDRAM controller, and the rest data with agreed length of the burst is written in the burst buffer for sending until the whole burst is read and sent.

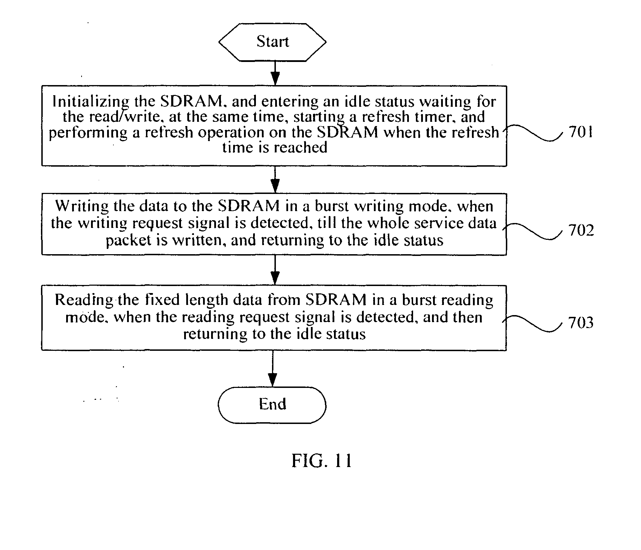

In FIG. 11, a schematic flow chart of the read/write operation of the SDRAM controller is shown; and the detailed steps of the read/write operation of the burst performed by the SDRAM controller are described as follows:

In step 701, initialize the SDRAM, and enter an idle status waiting for the read/write, at the same time, start a refresh timer, and perform a refresh operation on the SDRAM when the refresh time is reached;

In step 702, when the writing request signal is detected, continuously write the data from the requested writing address to the SDRAM in a whole page burst writing mode until the whole service data packet is written, then return the idle status;

In step 703, when the reading request signal including the agreed data length is detected, read the data with agreed data length from the requested reading address to the burst buffer in a whole page burst reading mode, and then return the idle status.

It may be known from the embodiments of the system and the method that in the present invention, the data and the description information of the externally entered service data packet are respectively stored; and the corresponding processing is performed on the description information, thus preventing the multiple transferring and operation of the data in the service data packet, and improving the assembling efficiency.

The whole service data packet is read at a time in the burst writing mode of the SDRAM; and a part of the burst data is pre-read to the burst buffer in advance during reading so that the utilizing efficiency of the SDRAM data bus may be improved at the maximum extent; and the read/write speed is macroscopically improved. Therefore, the similar effect may be reached without using the high speed SRAM, and the capacity and the cost are better.

The FEC status and parameter table is maintained and updated; the service data packet is driven; and the length threshold and the time threshold are detected by means of instant polling, so the disposing manner and the maintenance are relatively flexible. When the SDRAM space is used, a dynamic applying manner is adopted instead of the fixedly allocated memory space; the continuous address space is adopted for storing the burst, so it is flexible and efficient on the using of the memory space.

It is apparent to those skilled in the art that modifications and variations can be made without departing from the scope of the present invention. Therefore, the modifications and variations described in the appended claims and equivalences thereof fall within the protecting range of the present invention.

## Claims

1. A burst sending system based on an optical burst switching network the system comprising:
a service data packet receiving and information extracting module (1) connected to a buffer (2), adapted to receive service data, extract description information, and then store the description information of the service data in the buffer (2);
a burst generation and information maintenance module (3) connected to the buffer (2), adapted to search a forwarding equivalence class FEC corresponding to the service data according to the description information, assemble the service data to a burst according to FEC status information and/or FEC parameter information, update the FEC status information and/or the FEC parameter information, and control the output of the FEC status information and/or the FEC parameter information when it is determined that the burst reaches a length threshold according to the updated FEC information;
a burst butter (5);
a burst-to-be-sent information receiving and processing module (6) adapted to determine a corresponding burst according to the output FEC status information and/or the output FEC parameter information, write the corresponding burst in said burst batter, convert the corresponding burst in said burst batter to an optical burst data packet, and send the optical burst data packet; and **characterized in that** it comprises also
an accurate timer (11) connected to the burst-to-be-sent information receiving and processing module (6), and adapted to reserve a sending startup time with a fixed length at the same time the corresponding burst is written in said burst butter.

2. The burst sending system according to claim 1, further comprising:
a storage unit controller (4) connected to the buffer (2) and the burst generation and information maintenance module (3), and adapted to execute a burst read/write operation on a storage unit, wherein the burst read/write operation comprises controlling the input of the burst in the storage unit to a burst buffer (5) when triggered by the information receiving-and-processing module (6) for the burst to be sent, wherein the storage unit is applied to storing the assembled burst;
wherein the burst buffer (5) is connected to the storage unit controller (4) and an optical physical layer device, adapted to receive the burst delivered by the storage unit under controlling of the storage unit controller (4), provide a buffer space for sending the burst, and output the burst to the optical physical layer device;
wherein the burst buffer (5) is connected to the burst-to-be-sent information receiving and processing module (6), and the burst in the burst buffer (5) is read through the burst-to-be-sent information receiving and processing module (6).

3. The burst sending system according to claim 1, wherein the buffer (2) comprises:
an information buffer (21) connected to the service data packet receiving and information extracting module (1) and the burst generation and information maintenance module (3), and adapted to store description information of current service data; and
a data buffer (22) connected to the service data packet receiving and information extracting module (1), the burst generation and information maintenance module (3) and the storage unit controller (4), and adapted to store the current service data.

4. The burst sending system according to claim 1, further comprising a time polling detector (8) connected to the burst-to-be-sent information receiving and processing module (6), and adapted to control the output of the FEC status information and/or the FEC parameter information when it is detected that the burst reaches a time threshold.

5. The burst sending system according to claim 4, further comprising an FEC access arbitrator (9) connected to the burst generation and information maintenance module (3) and the time polling detector (8), and adapted to arbitrate a right of access to the FEC information when the burst generation and information maintenance module (3) and the time polling detector (8) both require to operate an FEC status table and an FEC parameter table (7).

6. The burst sending system according to claim 5, further comprising a burst information generator (10) connected to the burst generation and information maintenance module (3), the time polling detector (8), and the burst-to-be-sent information receiving and processing module (6), and adapted to integrate the FEC information sent by the burst generation and information maintenance module (3) and the time polling detector (8) to an unified external interface.

7. A burst sending method based on optical burst switching network comprising:
receiving service data to be sent, and storing the service data and the description information thereof to a buffer (2);
searching a forwarding equivalence class FEC corresponding to the service data according to the description information in the buffer (2), assembling the service data to a burst according to FEC status information and/or FEC parameter information, and updating the FEC status information and/or the FEC parameter information; and
determining a corresponding burst according to the current FEC status information and/or the current FEC parameter information, and converting the corresponding burst to an optical burst data packet to be sent when it is determined that the burst reaches a length threshold according to the updated FEC status information and/or the updated FEC parameter information;
wherein before or when the burst-to-be-sent is determined, the method **characterised by**:
reading the burst-to-be-sent from the storage unit, and buffering the burst-to-be-sent when starting an accurate timer to begin to count down,
executing the operation of sending the buffered burst when it is determined that a sending moment is reached according to a timing result of the accurate timer.

8. The burst sending method according to claim 7, wherein the step of storing the service data and the description information thereof to a buffer (2) further comprises:
converting a data width of the acquired service data to an internal bus width through a serial-to-parallel conversion, storing the acquired service data to a data buffer (22), and extracting and storing the description information of the service data to an information buffer (21).

9. The burst sending method according to claim 8, wherein the description information comprises at least one of a service data length, a service address of the service data and a quality of service QoS.

10. The burst sending method according to claim 8, wherein the step of assembling the service data to a burst further comprises:
reading the description information of the service data in the information buffer (21) in sequence, and determining an FEC number in the description information;
performing an access arbitration on whether the FEC number may access the FEC information, and acquiring the FEC information corresponding to the FEC number after determining that the access is allowed; and
assembling the service data to a burst according to the FEC information, and storing the burst into a corresponding storing address in a storage unit.

11. The burst sending method according to claim 10, wherein the step of assembling the service data to a burst further comprises:
judging whether the FEC allows assembling after acquiring the FEC information corresponding to the FEC number; further judging whether the FEC burst exists if the assembly is allowed; applying for a storage unit space, reading and updating a current storage unit base address counter, obtaining a storing using space for the storage unit of the burst, obtaining a burst-length information and a storing address information of a current storage unit by operation if the FEC burst does not exist; obtaining the burst-length information and the storing address information of the current storage unit by direction operation if the FEC burst exists; and sending a command of abandoning the service data to the data buffer (22) if the assembly is not allowed.

12. The burst sending method according to claim 10, wherein after the burst is stored in the storage unit, the method further comprises an operation of polling detecting whether a time threshold is reached, and the operation comprises in detail:
applying for a right of access to an FEC status table and an FEC parameter table, and acquiring corresponding FEC status information and/or corresponding FEC parameter information according to the current FEC number;
detecting whether the FEC number reaches the time threshold according to the acquired FEC information; sending the information to the burst according to the FEC status parameter to execute a burst sending operation, and updating the FEC status information and/or the FEC parameter information if the FEC number reaches the time threshold; otherwise releasing the right of access to the FEC status and the FEC parameter table, and detecting the time threshold of a next FEC number.

13. The burst sending method according to claim 7, after sending the buffered burst, further comprising:
judging whether a buffered data amount is lower than a security value; and continuing to read and buffer the remaining length-specified data of the burst until the whole burst is read and sent when the data amount is lower than the security value.

14. The burst sending method according to any one of claims 7 to 13, wherein
the FEC status information comprises an empty flag bit for performing a new burst initialization; a storage unit initial address for indicating an initial storing address of the current burst; a current storage unit writing address for indicating a storing address of a next service data packet of the burst; a current burst-length for judging whether the burst-length exceeds the length threshold; a burst generation time for judging whether the burst exceeds the time threshold;
the FEC parameter information comprises a using flag for judging whether the current assembly parameter is being used; an enabling flag for judging whether the current FEC is able to perform the assembly; a length threshold for providing the length threshold; a burst time threshold for providing the time threshold; a burst base address increment for applying for the storage unit space.

## Patentansprüche

1. Burst-Sendesystem, basierend auf einem optischen Burst-Schaltnetz, wobei das System Folgendes umfasst:
ein Dienstdatenpaketempfangs- und Informationsextraktionsmodul (1), das mit einem Puffer (2) verbunden ist und dafür ausgelegt ist, Dienstdaten zu empfangen, Beschreibungsinformationen zu extrahieren und dann die Beschreibungsinformationen der Dienstdaten in dem Puffer (2) zu speichern;
ein Bursterzeugungs- und Informationspflegemodul (3), das mit dem Puffer (2) verbunden ist und dafür ausgelegt ist, eine Weiterleitungsäquivalenzklasse, FEC, die den Dienstdaten entspricht, in Übereinstimmung mit den Beschreibungsinformationen zu suchen, die Dienstdaten in Übereinstimmung mit den FEC-Zustandsinformationen und/oder den FEC-Parameterinformationen zu einem Burst zusammenzustellen, die FEC-Zustandsinformationen und/oder die FEC-Parameterinformationen zu aktualisieren und die Ausgabe der FEC-Zustandsinformationen und/oder der FEC-Parameterinformationen zu steuern, wenn in Übereinstimmung mit den aktualisierten FEC-Informationen bestimmt wird, dass der Burst einen Längenschwellenwert erreicht;
einen Burst-Puffer (5);
ein Informationsempfangs- und -verarbeitungsmodul (6) für den zu sendenden Burst, das dafür ausgelegt ist, einen entsprechenden Burst in Übereinstimmung mit den ausgegebenen FEC-Zustandsinformationen und/oder den ausgegebenen FEC-Parameterinformationen zu bestimmen, den entsprechenden Burst in den Burst-Puffer zu schreiben, den entsprechenden Burst in dem Burst-Puffer in ein optisches Burst-Datenpaket umzusetzen und das optische Burst-Datenpaket zu senden; **dadurch gekennzeichnet, dass** es außerdem Folgendes umfasst:
einen genauen Zeitgeber (11), der mit dem Informationsempfangs- und -verarbeitungsmodul (6) für den zu sendenden Burst verbunden ist und dafür ausgelegt ist, einen Sendeanfangszeitpunkt mit einer festen Länge zum gleichen Zeitpunkt, zu dem der entsprechende Burst in den Burst-Puffer geschrieben wird, zu reservieren.

2. Burst-Sendesystem nach Anspruch 1, das ferner Folgendes umfasst:
eine Speichereinheits-Steuereinrichtung (4), die mit dem Puffer (2) und dem Bursterzeugungs- und Informationspflegemodul (3) verbunden ist und dafür ausgelegt ist, eine Burst-Lese/Schreib-Operation in der Speichereinheit auszuführen, wobei die Burst-Lese/Schreib-Operation das Steuern der Eingabe des Bursts in der Speichereinheit in einen Burst-Puffer (5) umfasst, wenn sie durch das Informationsempfangs- und -verarbeitungsmodul (6) für den zu sendenden Burst ausgelöst wird, wobei die Speichereinheit dazu angewendet wird, den zusammengestellten Burst zu speichern;
wobei der Burst-Puffer (5) mit der Speichereinheits-Steuereinrichtung (4) und einer Vorrichtung der optischen physikalischen Schicht verbunden ist und dafür ausgelegt ist, den durch die Speichereinheit unter der Steuerung der Speichereinheits-Steuereinrichtung (4) gelieferten Burst zu empfangen, einen Pufferraum für das Senden des Bursts bereitzustellen und den Burst an die Vorrichtung der optischen physikalischen Schicht auszugeben;
wobei der Burst-Puffer (5) mit dem Informationsempfangs- und -verarbeitungsmodul (6) für den zu sendenden Burst verbunden ist und der Burst in dem Burst-Puffer (5) durch das Informationsempfangs- und -verarbeitungsmodul (6) für den zu sendenden Burst gelesen wird.

3. Burst-Sendesystem nach Anspruch 1, wobei der Puffer (2) Folgendes umfasst:
einen Informationspuffer (21), der mit dem Dienstdatenpaketempfangs- und Informationsextraktionsmodul (1) und dem Bursterzeugungs- und Informationspflegemodul (3) verbunden ist und dafür ausgelegt ist, die Beschreibungsinformationen der aktuellen Dienstdaten zu speichern; und
einen Datenpuffer (22), der mit dem Dienstdatenpaketempfangs- und Informationsextraktionsmodul (1), dem Bursterzeugungs- und Informationspflegemodul (3) und der Speichereinheits-Steuereinrichtung (4) verbunden ist und dafür ausgelegt ist, die aktuellen Dienstdaten zu speichern.

4. Burst-Sendesystem nach Anspruch 1, das ferner einen Zeitabrufdetektor (8) umfasst, der mit dem Informationsempfangs- und -verarbeitungsmodul (6) für den zu sendenden Burst verbunden ist und dafür ausgelegt ist, die Ausgabe des FEC-Zustandsinformationen und/oder der FEC-Parameterinformationen zu steuern, wenn detektiert wird, dass der Burst einen Zeitschwellenwert erreicht.

5. Burst-Sendesystem nach Anspruch 4, das ferner einen FEC-Zugriffs-Arbitrierer (9) umfasst, der mit dem Bursterzeugungs- und Informationspflegemodul (3) und dem Zeitabrufdetektor (8) verbunden ist und dafür ausgelegt ist, ein Recht des Zugriffs auf die FEC-Informationen zu arbitrieren, wenn das Bursterzeugungs- und Informationspflegemodul (3) und der Zeitabrufdetektor (8) beide erfordern, eine FEC-Zustandstabelle und eine FEC-Parametertabelle (7) zu betreiben.

6. Burst-Sendesystem nach Anspruch 5, das ferner einen Burst-Informationsgenerator (10) umfasst, der mit dem Bursterzeugungs- und Informationspflegemodul (3), dem Zeitabrufdetektor (8) und dem Informationsempfangs- und -verarbeitungsmodul (6) für den zu sendenden Burst verbunden ist und dafür ausgelegt ist, die durch das Bursterzeugungs- und Informationspflegemodul (3) und den Zeitabrufdetektor (8) an eine einheitliche externe Schnittstelle gesendeten FEC-Informationen zu integrieren.

7. Burst-Sendeverfahren, basierend auf einem optischen Burst-Schaltnetz, das Folgendes umfasst:
Empfangen der zu sendenden Dienstdaten und Speichern der Dienstdaten und ihrer Beschreibungsinformationen in einem Puffer (2);
Suchen nach einer Weiterleitungsäquivalenzklasse, FEC, die den Dienstdaten entspricht, in Übereinstimmung mit den Beschreibungsinformationen in dem Puffer (2), Zusammenstellen der Dienstdaten in Übereinstimmung mit den FEC-Zustandsinformationen und/oder den FEC-Parameterinformationen zu einem Burst und Aktualisieren der FEC-Zustandsinformationen und/oder der FEC-Parameterinformationen; und
Bestimmen eines entsprechenden Bursts in Übereinstimmung mit den aktuellen FEC-Zustandsinformationen und/oder den aktuellen FEC-Parameterinformationen und Umsetzen des entsprechenden Bursts in ein optisches Burst-Datenpaket, das zu senden ist, wenn in Übereinstimmung mit den aktualisierten FEC-Zustandsinformationen und/oder den aktualisierten FEC-Parameterinformationen bestimmt wird, dass der Burst einen Längenschwellenwert erreicht;
wobei bevor oder dann, wenn der zu sendende Burst bestimmt wird, das Verfahren **gekennzeichnet ist durch**:
Lesen des zu sendenden Bursts aus der Speichereinheit und Puffern des zu sendenden Bursts, wenn ein genauer Zeitgeber gestartet wird, um das Herunterzählen zu beginnen;
Ausführen der Operation des Sendens des gepufferten Bursts, wenn in Übereinstimmung mit einem Zeitmessergebnis des genauen Zeitgebers bestimmt wird, dass ein Sendezeitpunkt erreicht ist.

8. Burst-Sendeverfahren nach Anspruch 7, wobei der Schritt des Speichems der Dienstdaten und ihrer Beschreibungsinformationen in einem Puffer (2) ferner Folgendes umfasst:
Umsetzen einer Datenbreite der erfassten Dienstdaten zu der Breite eines internen Busses durch Seriell-Parallel-Umsetzung, Speichern der erfassten Dienstdaten in einem Datenpuffer (22) und Extrahieren und Speichern der Beschreibungsinformationen der Dienstdaten in einem Informationspuffer (21).

9. Burst-Sendeverfahren nach Anspruch 8, wobei die Beschreibungsinformationen eine Dienstdatenlänge und/oder eine Dienstadresse der Dienstdaten und/oder eine Dienstqualität, QoS, umfassen.

10. Burst-Sendeverfahren nach Anspruch 8, wobei der Schritt des Zusammenstellens der Dienstdaten zu einem Burst ferner Folgendes umfasst:
Lesen der Beschreibungsinformationen der Dienstdaten in dem Informationspuffer (21) der Reihe nach und Bestimmen einer FEC-Nummer in den Beschreibungsinformationen;
Ausführen einer Zugriffsarbitrierung, ob die FEC-Nummer auf die FEC-Informationen zugreifen kann, und Erfassen der FEC-Informationen, die der FEC-Nummer entsprechen, nach dem Bestimmen, dass der Zugriff erlaubt ist; und
Zusammenstellen der Dienstdaten zu einem Burst in Übereinstimmung mit FEC-Informationen und Speichern des Bursts in einer entsprechenden Speicheradresse in einer Speichereinheit.

11. Burst-Sendeverfahren nach Anspruch 10, wobei der Schritt des Zusammenstellens der Dienstdaten zu einem Burst ferner Folgendes umfasst:
Beurteilen, ob die FEC das Zusammenstellen erlaubt, nach dem Erfassen der FEC-Informationen, die der FEC-Nummer entsprechen; ferner Beurteilen, ob der FEC-Burst vorhanden ist, falls das Zusammenstellen erlaubt ist; Beantragen eines Raums in der Speichereinheit, Lesen und Aktualisieren eines aktuellen Speichereinheits-Basisadressenzählers, Erhalten eines Raums für die Verwendung beim Speichern für die Speichereinheit des Burst, Erhalten der Burst-Längeninformationen und der Speicheradresseninformationen einer aktuellen Speichereinheit durch die Operation, falls der FEC-Burst nicht vorhanden ist; Erhalten der Burst-Längeninformationen und der Speicheradresseninformationen der aktuellen Speichereinheit durch die Leitungsoperation, falls der FEC-Burst vorhanden ist; und Senden eines Befehls zum Aufgeben der Dienstdaten an den Datenpuffer (23), falls das Zusammenstellen nicht erlaubt ist.

12. Burst-Sendeverfahren nach Anspruch 10, wobei, nachdem der Burst in der Speichereinheit gespeichert ist, das Verfahren ferner eine Operation des Abrufens umfasst, die detektiert, ob ein Zeitschwellenwert erreicht ist, wobei die Operation im Einzelnen Folgendes umfasst:
Beantragen eines Rechts des Zugriffs auf eine FEC-Zustandstabelle und eine FEC-Parametertabelle und Erfassen der entsprechenden FEC-Zustandsinformationen und/oder der entsprechenden FEC-Parameterinformationen in Übereinstimmung mit der aktuellen FEC-Nummer;
Detektieren in Übereinstimmung mit den erfassten FEC-Informationen, ob die FEC-Nummer den Zeitschwellenwert erreicht; Senden der Informationen an den Burst in Übereinstimmung mit dem FEC-Zustandsparameter, um eine Burst-Sendeoperation auszuführen, und Aktualisieren der FEC-Zustandsinformationen und/oder der FEC-Parameterinformationen, falls die FEC-Nummer den Zeitschwellenwert erreicht;
andernfalls Freigeben des Rechts des Zugriffs auf die FEC-Zustands- und FEC-Parametertabelle und Detektieren des Zeitschwellenwertes einer nächsten FEC-Nummer.

13. Burst-Sendeverfahren nach Anspruch 7, das nach dem Senden des gepufferten Bursts ferner Folgendes umfasst:
Beurteilen, ob eine gepufferte Datenmenge kleiner als ein Sicherheitswert ist; und
Fortsetzen, die verbleibenden längenspezifizierten Daten des Bursts zu lesen und zu puffern, bis der ganze Burst gelesen und gesendet ist, wenn die Datenmenge kleiner als der Sicherheitswert ist.

14. Burst-Sendeverfahren nach einem der Ansprüche 7 bis 13, wobei
die FEC-Zustandsinformationen ein Leermerkerbit zum Ausführen einer neuen Burst-Initialisierung; eine Anfangsadresse der Speichereinheit, um eine anfängliche Speicheradresse des aktuellen Bursts anzugeben; eine aktuelle Schreibadresse der Speichereinheit, um eine Speicheradresse eines nächsten Dienstdatenpakets des Bursts anzugeben; eine aktuelle Burst-Länge, um zu beurteilen, ob die Burst-Länge den Längenschwellenwert übersteigt; und eine Burst-Erzeugungszeit, um zu beurteilen, ob der Burst den Zeitschwellenwert übersteigt, umfassen;
die FEC-Parameterinformationen einen Verwendungsmerker, um zu beurteilen, ob der aktuelle Zusammenstellparameter verwendet wird; einen Freigabemerker, um zu beurteilen, ob die aktuelle FEC das Zusammenstellen ausführen kann; einen Längenschwellenwert, um den Längenschwellenwert bereitzustellen; einen Burst-Zeitschwellenwert, um den Zeitschwellenwert bereitzustellen; und ein Burst-Basisadresseninkrement, um den Raum in der Speichereinheit zu beantragen, umfassen.

## Revendications

1. Système de transmission de rafale basé sur un réseau de commutation optique par rafale, le système comprenant :
un module de réception de paquets de données de service et d'extraction d'informations (1) relié à un tampon (2), conçu pour recevoir des données de service, extraire des informations de description puis stocker les informations de description des données de service dans le tampon (2) ;
un module de génération de rafale et de tenue à jour d'informations (3) relié au tampon (2), conçu pour rechercher une classe d'équivalence d'acheminement FEC correspondant aux données de service en fonction des informations de description, assembler les données de service pour former une rafale en fonction d'informations d'état FEC et/ou d'informations de paramètre FEC, mettre à jour les informations d'état FEC et/ou les informations de paramètre FEC, et commander la sortie des informations d'état FEC et/ou des informations de paramètre FEC s'il est déterminé que la rafale atteint une longueur limite en fonction des informations FEC mises à jour ;
un tampon de rafale (5) ;
un module de réception et de traitement d'informations de rafale à transmettre (6), conçu pour déterminer une rafale correspondante en fonction des informations d'état FEC sorties et/ou des informations de paramètre FEC sortis, écrire la rafale correspondante dans ledit tampon de rafale, convertir la rafale correspondante dans ledit tampon de rafale en un paquet de données de rafale optique, et transmettre le paquet de données de rafale optique ; et
le système étant **caractérisé en ce qu'**il comprend en outre :
un temporisateur de précision (11) relié au module de réception et de traitement d'informations de rafale à transmettre (6), et conçu pour réserver un temps de démarrage de transmission d'une longueur fixe simultanément à l'écriture de la rafale correspondante dans ledit tampon de rafale.

2. Système de transmission de rafale selon la revendication 1, comprenant en outre :
un contrôleur (4) d'unité de stockage relié au tampon (2) et au module de génération de rafale et de tenue à jour d'informations (3), et conçu pour exécuter une opération de lecture/écriture de rafale sur une unité de stockage, laquelle opération de lecture/écriture de rafale comprend la commande de l'application de la rafale dans l'unité de stockage à l'entrée d'un tampon de rafale (5) lorsque la transmission de la rafale est déclenchée par le module de réception et de traitement d'informations (6), laquelle unité de stockage sert à stocker la rafale assemblée ;
le tampon de rafale (5) étant relié au contrôleur (4) d'unité de stockage et à un dispositif de couche physique optique, et conçu pour recevoir la rafale fournie par l'unité de stockage sous la commande du contrôleur (4) d'unité de stockage, prévoir un espace de tampon pour la transmission de la rafale, et fournir la rafale au dispositif de couche physique optique ;
le tampon de rafale (5) étant relié au module de réception et de traitement d'informations de rafale à transmettre (6), et la rafale dans le tampon de rafale (5) étant lue par le module de réception et de traitement d'informations de rafale à transmettre (6).

3. Système de transmission de rafale selon la revendication 1, le tampon (2) comprenant :
un tampon d'informations (21) relié au module de réception de paquets de données de service et d'extraction d'informations (1) et au module de génération de rafale et de tenue à jour d'informations (3), et conçu pour stocker des informations de description associées à des données de service en cours ; et
un tampon de données (22) relié au module de réception de paquets de données de service et d'extraction d'informations (1), au module de génération de rafale et de tenue à jour d'informations (3) et au contrôleur (4) d'unité de stockage, et conçu pour stocker les données de service en cours.

4. Système de transmission de rafale selon la revendication 1, comprenant en outre un détecteur à interrogation temporelle (8) relié au module de réception et de traitement d'informations de rafale à transmettre (6), et conçu pour commander la sortie des informations d'état FEC et/ou des informations de paramètre FEC s'il est détecté que la rafale atteint une limite de temps.

5. Système de transmission de rafale selon la revendication 4, comprenant en outre un arbitreur d'accès FEC (9) relié au module de génération de rafale et de tenue à jour d'informations (3) et au détecteur à interrogation temporelle (8), et conçu pour arbitrer un droit d'accès aux informations FEC lorsque le module de génération de rafale et de tenue à jour d'informations (3) et le détecteur à interrogation temporelle (8) doivent tous deux faire appel à une table d'état FEC et à une table de paramètre FEC (7).

6. Système de transmission de rafale selon la revendication 5, comprenant en outre un générateur d'informations de rafale (10) relié au module de génération de rafale et de tenue à jour d'informations (3), au détecteur à interrogation temporelle (8) et au module de réception et de traitement d'informations de rafale à transmettre (6), et conçu pour intégrer les informations FEC transmises par le module de génération de rafale et de tenue à jour d'informations (3) et le détecteur à interrogation temporelle (8) vers une interface externe unifiée.

7. Procédé de transmission de rafale basé sur un réseau de commutation optique par rafale, le procédé comprenant les étapes consistant à :
recevoir des données de service à transmettre, et stocker les données de service et les informations de description qui leur sont associées dans un tampon (2) ;
rechercher une classe d'équivalence d'acheminement FEC correspondant aux données de service en fonction des informations de description dans le tampon (2), assembler les données de service pour former une rafale en fonction d'informations d'état FEC et/ou d'informations de paramètre FEC, et mettre à jour les informations d'état FEC et/ou les informations de paramètre FEC ; et
déterminer une rafale correspondante en fonction des informations d'état FEC en cours et/ou des informations de paramètre FEC en cours, et convertir la rafale correspondante en un paquet de données de rafale optique à transmettre s'il est déterminé que la rafale atteint une longueur limite en fonction des informations d'état FEC mises à jour et/ou des informations de paramètre FEC mises à jour ;
le procédé étant caractérisé, préalablement ou au moment de la détermination de la rafale à transmettre, par les étapes consistant à :
lire la rafale à transmettre dans l'unité de stockage, et mettre en tampon la rafale à transmettre lors du démarrage d'un temporisateur de précision pour lancer un décomptage,
exécuter l'opération de transmission de la rafale mise en tampon s'il est déterminé qu'un instant de transmission est atteint en fonction d'un résultat de temporisation du temporisateur de précision.

8. Procédé de transmission de rafale selon la revendication 7, l'étape consistant à stocker les données de service et les informations de description qui leur sont associées dans un tampon (2) comprenant en outre les étapes consistant à :
convertir, au moyen d'une conversion série-parallèle, une largeur de données des données de service acquises en une largeur de bus interne, stocker les données de service acquises dans un tampon de données (22), et extraire et stocker les informations de description associées aux données de service dans un tampon d' informations (21).

9. Procédé de transmission de rafale selon la revendication 8, les informations de description comprenant une longueur de données de service et/ou une adresse de service des données de service et/ou une qualité de service QoS.

10. Procédé de transmission de rafale selon la revendication 8, l'étape consistant à assembler les données de services pour former une rafale comprenant en outre les étapes consistant à :
lire séquentiellement les informations de description associées aux données de service dans le tampon d'informations (21), et déterminer un numéro FEC dans les informations de description ;
procéder à un arbitrage d'accès pour déterminer si le numéro FEC est autorisé à accéder aux informations FEC, et acquérir les informations FEC correspondant au numéro FEC s'il est déterminé que l'accès est autorisé ; et
assembler les données de service pour former une rafale en fonction des informations FEC, et stocker la rafale dans une adresse de stockage correspondante dans une unité de stockage.

11. Procédé de transmission de rafale selon la revendication 10, l'étape consistant à assembler les données de service pour former une rafale comprenant en outre les étapes consistant à :
établir si la FEC autorise l'assemblage suite à l'acquisition des informations FEC correspondante au numéro FEC ; établir en outre, si l'assemblage est autorisé, si la rafale FEC existe ; solliciter un espace d'unité de stockage, lire et mettre à jour un compteur d'adresse de base d'unité de stockage en cours, obtenir un espace d'utilisation de stockage pour l'unité de stockage de la rafale, obtenir une information de longueur de rafale et une information d'adresse de stockage d'une unité de stockage en cours par une opération si la rafale FEC n'existe pas ; obtenir l'information de longueur de rafale et l'information d'adresse de stockage de l'unité de stockage en cours par une opération de direction si la rafale FEC existe ; et
transmettre une commande d'abandon des données de service au tampon de données (22) si l'assemblage n'est pas autorisé.

12. Procédé de transmission de rafale selon la revendication 10, comprenant en outre, suite au stockage de la rafale dans l'unité de stockage, l'étape consistant à détecter par interrogation si une limite de temps est atteinte, cette étape consistant plus particulièrement à :
solliciter un droit d'accès à une table d'état FEC et à une table de paramètre FEC, et acquérir des informations d'état FEC correspondantes et/ou des informations de paramètre FEC correspondantes en fonction du numéro FEC en cours ;
détecter si le numéro FEC atteint la limite de temps en fonction des informations FEC acquises ; transmettre les informations à la rafale en fonction du paramètre d'état FEC pour exécuter une opération de transmission de rafale, et mettre à jour les informations d'état FEC et/ou les informations de paramètre FEC si le numéro FEC atteint la limite de temps ; dans le cas contraire, retirer le droit d'accès à la table d'état FEC et à la table de paramètre FEC, et détecter la limite de temps d'un numéro FEC suivant.

13. Procédé de transmission de rafale selon la revendication 7, comprenant en outre, suite à la transmission de la rafale mise en tampon, l'étape consistant à :
établir si une quantité de données mise en tampon est inférieure à une valeur de sécurité ; et, si la quantité de données est inférieure à la valeur de sécurité, continuer de lire et de mettre en tampon les données de longueur spécifiée restantes de la rafale jusqu'à ce que la totalité de la rafale ait été lue et transmise.

14. Procédé de transmission de rafale selon l'une quelconque des revendications 7 à 13,
les informations d'état FEC comprenant un bit indicateur vide servant à réaliser une nouvelle initialisation de rafale ; une adresse initiale d'unité de stockage servant à indiquer une adresse de stockage initiale de la rafale en cours ; une adresse d'écriture d'unité de stockage en cours servant à indiquer une adresse de stockage d'un prochain paquet de données de service de la rafale ; une longueur de rafale en cours servant à établir si la longueur de rafale dépasse la longueur limite ; un temps de génération de rafale servant à établir si la rafale dépasse la limite de temps ;
les informations de paramètre FEC comprenant un indicateur d'utilisation servant à établir si le paramètre d'assemblage en cours est utilisé ; un indicateur de validation servant à établir si la FEC courante est apte à procéder à l'assemblage ; une longueur limite représentant la longueur limite ; une limite de temps de rafale représentant la limite de temps ; un incrément d'adresse de base de rafale utilisé pour solliciter l'espace d'unité de stockage.
